# FASCICULE DE BREVET EUROPEEN

(11) **EP 1 875 115 B1**
(45) Date de publication et mention de la délivrance du brevet: **20.03.2013**
(21) Numéro de dépôt: 06743802.8
(22) Date de dépôt: 12.04.2006
(51) Int. Cl.: F16L 21/06, F16B 2/06, F16L 33/04

(54) **DISPOSITIF DE SERRAGE A OREILLES DE SERRAGE RENFORCEES**
KLEMMVORRICHTUNG MIT VERSTÄRKTEN FESTKLEMMENOHREN
CLAMPING DEVICE WITH REINFORCED CLAMPING LUGS

(30) Priorité: 13.04.2005 FR 0503689
(43) Date de publication de la demande: 09.01.2008
(73) Titulaire: Etablissements CAILLAU, 92130 Issy-les-Moulineaux (FR)
(72) Inventeur: RIGOLLET, Nicolas, F-41200 Romorantin Lanthenay (FR); PREVOT, Fabrice, F-41130 Selles sur Cher (FR); ROINTRU, Tony, F-41210 Marcilly en Gault (FR)
(74) Mandataire: Intès, Didier Gérard André
(86) Numéro de dépôt international: PCT/FR2006/050341
(87) Numéro de publication internationale: WO 2006/109001

(56) Documents cités:
- EP-A- 0 367 169
- US-A- 848 139
- US-A- 4 953 899
- US-A1- 2004 068 847

## Description

La présente invention concerne un dispositif de serrage comprenant un collier, susceptible d'être disposé autour d'objets à serrer et présentant au moins une paire d'oreilles saillantes, le dispositif comprenant, en outre, des moyens de serrage aptes à coopérer avec des oreilles de ladite paire pour déplacer des dernières l'une par rapport à l'autre de manière à provoquer une diminution du diamètre du collier.

En particulier, les moyens de serrage sont du type à vis et écrou. On connaît des colliers de ce type, par exemple pour le serrage de deux tubes lisses disposés bout à bout, par la demande de brevet EP 1 181 477. Classiquement, le collier comporte une partie de ceinture par rapport à laquelle les deux oreilles servant au serrage sont redressées. La partie de ceinture est disposée autour du ou des objets à serrer, et les oreilles, qui forment des lèvres relevées, sont disposées en regard l'une de l'autre en délimitant entre elles une fente dont la largeur est diminuée lors du serrage.

Dans le collier décrit dans le brevet précité, les oreilles formées par ces lèvres se trouvent au voisinage immédiat des bords de la fente précitée. Même si ces colliers apportent globalement satisfaction, on s'est rendu compte que, pour certaines applications exigeantes, le serrage risque de perdre une partie de son efficacité car, d'une part, la coopération des moyens de serrage, en particulier des moyens à vis, risque de ne pas s'exercer de la manière souhaitée, en particulier du fait d'un défaut de guidage de la ou les vis et, d'autre part, il existe un risque de pliage des oreilles sous l'effet des efforts de serrage.

Le document US 2004/0068847 divulgue un dispositif de serrage selon le préambule de la revendication 1. Dans ce document, l'entretoise de renfort d'une oreille est formée par une barre insérée entre la portion de raccordement et la paroi de serrage d'une oreille.

La présente invention vise à améliorer cet état de la technique.

Ce but est atteint grâce aux caractéristiques de la revendication 1.

Ce but est atteint grâce au fait que chaque oreille de ladite paire comporte une portion de raccordement à une partie de ceinture du collier, qui est redressée par rapport à ladite partie de ceinture et une paroi de serrage, avec laquelle les moyens de serrage viennent en prise et qui est repliée vers la partie de ceinture, et qu'un espace est ménagé entre la portion de raccordement et la paroi de serrage.

Grâce à cette configuration, les efforts de serrage s'appliquent directement sur la paroi de serrage, c'est-à-dire à distance de la portion de raccordement de l'oreille à la partie de ceinture. Si l'on considère les deux oreilles de la même paire qui se font face, les bords de la fente délimitée entre ces oreilles sont situés à la base de leurs portions de raccordement respectives. Même si, lors du serrage, une oreille tend à se déformer, cette déformation n'influence pas directement la largeur de la fente précitée, de sorte que le serrage peut tout de même être assuré en réduisant ladite largeur. De plus, les efforts de serrage s'appliquent dans des régions des oreilles éloignées de la partie de ceinture et n'ont donc pas tendance à modifier la circularité de la section de celle-ci.

Lorsque les moyens de serrage utilisent au moins une vis traversant les oreilles, le guidage de cette vis est amélioré puisque, pour chaque oreille, il met à contribution les deux paliers respectivement formés dans la portion de raccordement et dans la paroi de serrage.

La portion de raccordement est avantageusement courbe, sa concavité étant tournée vers la paroi de serrage. Elle présente avantageusement à sa base au moins une avancée dans laquelle la courbure de ladite portion est localement augmentée.

Le fait que la portion de raccordement soit courbe favorise une bonne répartition des efforts de serrage. La zone de courbure localement augmentée à la base de la portion de raccordement présente un écrouissage important et, par conséquent, est peu sujette aux déformations lors du serrage. De plus, le fait que les deux oreilles situées en regard l'une de l'autre présentent toutes deux des avancées de ce type permet de réduire localement la largeur de la fente pour rapprocher la ceinture d'une ceinture continue fermée sur elle-même.

La présence des moyens de renfort permet de repousser la limite de déformation plastique des oreilles et d'éviter les effets d'écrasement liés au pliage de ces oreilles.

Ces moyens de renfort sont de préférence disposés dans l'espace ménagé entre la portion de raccordement et la paroi de serrage et préservent les dimensions de cet espace; c'est-à-dire qu'ils évitent un rapprochement excessif entre la paroi de serrage et la portion de raccordement, qui conduirait à un écrasement de l'oreille sur elle-même.

Selon l'invention, les moyens de renfort d'une oreille comprennent une entretoise formée en une seule pièce avec l'oreille, ce qui présente l'avantage d'éviter la fabrication et la manipulation d'une pièce supplémentaire.

En particulier, les moyens de renfort comprennent au moins une entretoise s'étendant, à partir de la paroi de serrage, vers la portion de raccordement.

Ainsi, les moyens de renfort comprennent avantageusement deux entretoises, formées par des ailes de la paroi de serrage, repliées vers la portion de raccordement de telle sorte que les extrémités libres de ces ailes soient aptes à coopérer avec ladite portion et/ou une entretoise, repliée vers la portion de raccordement à partir de l'extrémité de la paroi de serrage en regard de la partie de ceinture, de telle sorte que l'extrémité libre de cette entretoise soit apte à coopérer avec la portion de raccordement.

En variante, les moyens de renfort peuvent comprendre au moins une entretoise qui s'étend à partir de la portion de raccordement, vers la paroi de serrage. Par exemple, il peut s'agir d'une languette découpée dans la paroi de raccordement, et pliée par rapport à elle de sorte que son extrémité libre soit située en regard de la paroi de serrage.

Selon une application particulière, le dispositif de l'invention sert à l'accouplement étanche de deux tubes lisses disposés bout à bout et comprend, en outre, une bague d'étanchéité apte à être disposée dans le manchon pour entourer les extrémités en regard des deux tubes.

Bien entendu, d'autres applications sont possibles, par exemple le serrage d'un tuyau emmanché sur un tube.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue en perspective d'un collier de serrage non revendiqué ;
- la figure 2 est une vue de dessus selon la flèche II, du collier de la figure 1 ;
- la figure 3 est une vue de détail selon la flèche III de la figure 2 ;
- la figure 4 est une vue en coupe selon la ligne IV-IV de la figure 2 ;
- la figure 5 est une vue en perspective d'un collier, selon une variante ;
- la figure 6 est une vue en bout selon la flèche VI, de ce collier ;
- les figures 7A et 7B sont deux vues en perspective montrant des exemples de réalisation pour des moyens de renfort constitués par un insert ;
- la figure 8 est une vue en perspective d'un collier selon une variante ;
- la figure 9A est une vue en perspective avec un arrachement, montrant le détail de la réalisation d'une oreille de ce collier ;
- la figure 9B est une coupe dans le plan IXB-IXB de la figure 9A ;
- la figure 9C est une coupe dans le plan IXC-IXC de la figure 9B ;
- la figure 10 est une vue en perspective du même collier, sans les moyens de serrage ;
- la figure 11 est une vue en perspective d'un collier, selon l'invention ;
- la figure 12 est une vue de détail selon la flèche XII de la figure 11 ;
- la figure 13 est une coupe dans le plan XIII-XIII de la figure 12 ;
- la figure 14 est une vue en perspective d'une oreille, montrant une variante ;
- la figure 15 est une vue en coupe dans le plan XV-XV de la figure 14 ;
- les figures 16 et 17 sont des vues partielles en perspective de colliers selon des variantes ;
- la figure 18 est une vue de dessus du collier de la figure 17 ; et
- la figure 19 est une vue de ce collier, en coupe selon la ligne XIX-XIX de la figure 18.

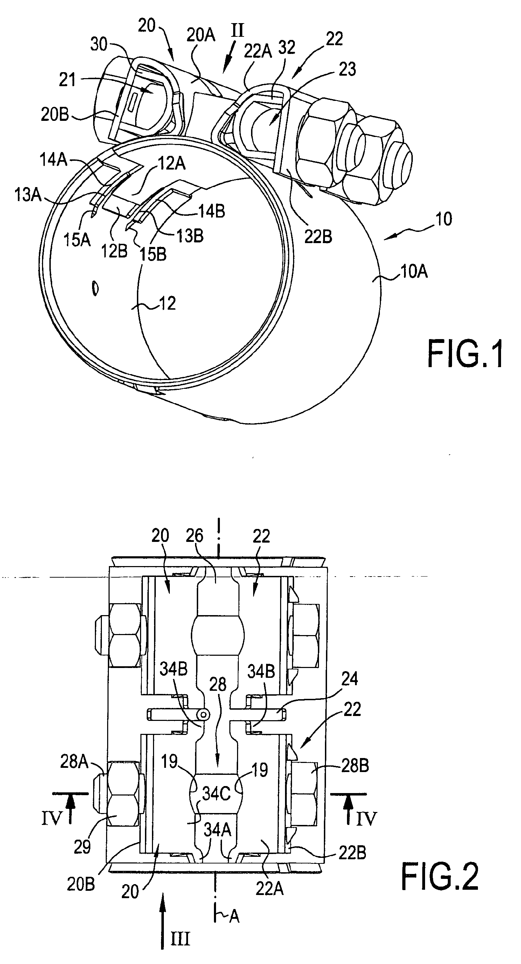

Le dispositif de serrage des figures 1 et 2 comprend un collier 10 à l'intérieur duquel est disposée une bague d'étanchéité 12 pour entourer les extrémités en regard de deux tubes lisses, accouplés de manière étanche à l'aide de ce dispositif. La bague d'étanchéité peut être réalisée de manière connue par la demande de brevet EP 1 181 477. Toutefois, avantageusement, comme le montre la figure 1, ses extrémités comportent respectivement une conformation mâle 12A et une conformation femelle 12B, qui reçoit la conformation mâle lors du serrage et qui est délimitée entre deux pattes de contact 13A et 13B. Le contact étanche se fait sur les bords de contact des pattes de contact 13A et 13B, qui peuvent être pliées lors du serrage pour favoriser la pénétration de la conformation mâle dans la conformation femelle. Des dégagements 14A et 14B favorisant ce pliage sont avantageusement aménagés sur les côtés des pattes 13A et 13B opposés à l'encoche 12B qui forme la conformation femelle. Pour favoriser ce pliage dans le sens ad hoc, des entailles 15A et 15B sont avantageusement ménagées à la base des pattes.

Dans la présente demande de brevet, on s'intéresse à la conformation particulière des oreilles de serrage du collier et à leurs renforts. En effet, comme on le voit sur les figures 1 et 2, le collier comporte au moins une paire d'oreilles 20, 22 disposées en regard l'une de l'autre. En l'espèce, la figure 2 montre que le collier comporte deux paires d'oreilles 20, 22, entre lesquelles une fente 24 transversale à l'axe A du collier est réalisée, pour découpler les déformations des oreilles des deux paires lors du serrage.

En l'espèce, les oreilles d'une même paire sont formées par des replis à partir des extrémités respectives de la bande qui constitue le collier. Une fente 26 longitudinale, c'est-à-dire parallèle à l'axe A, est ménagée entre des oreilles d'une paire. On comprend que lors du serrage, la largeur de cette fente va en diminuant.

Les moyens de serrage représentés comprennent, pour chaque paire d'oreilles, une vis 28 et un écrou 29 coopérant avec la tige filetée 28A de la vis, l'écrou coopérant avec l'une des oreilles 20 de la paire, tandis que la tête 28B de la tige coopère avec l'autre oreille 22.

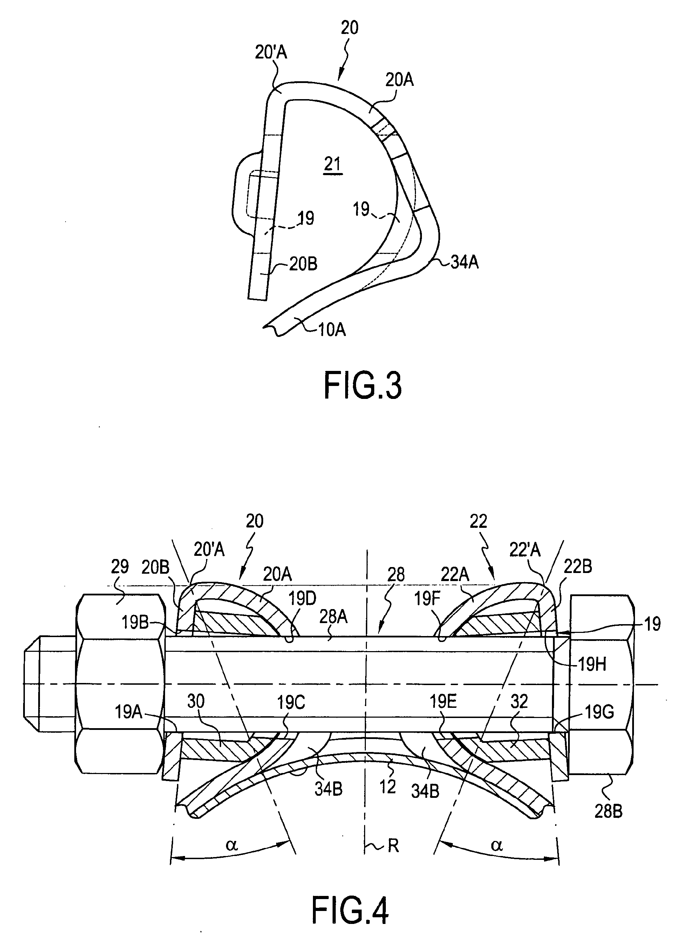

En référence à la figure 3, on explique plus en détail la conformation de l'oreille 20, sachant que celle de l'oreille 22 est globalement analogue, en étant sensiblement symétrique par rapport au plan médian de la fente 26.

L'oreille 20 comporte une portion de raccordement 20A à la partie de ceinture 10A du collier, qui est redressée par rapport à cette partie de ceinture, et une paroi de serrage 20B, qui est repliée vers cette partie de ceinture. Un espace 21 est ménagé entre la portion de raccordement et la paroi de serrage, formant ainsi la cavité précitée. La portion de raccordement 22A et la paroi de serrage 22B de l'oreille 22, ainsi que la cavité 23 formée dans cette oreille, sont également indiquées sur les figures 1 et 2.

Pour chaque oreille, la paroi de serrage est la partie de l'oreille avec laquelle les moyens de serrage viennent en prise. Ainsi, l'écrou 29 est en appui contre la paroi de serrage 20B de l'oreille 20, et la tête 28B de la vis 28 est en appui contre la paroi de serrage 22B de l'oreille 22. Bien -évidemment, les parois de serrage et les portions de raccordement présentent des perçages 19 qui sont alignés les uns avec les autres pour permettre le passage de la tige de la vis dans ces perçages.

La portion de raccordement 20A ou 22A est courbe, sa concavité étant tournée vers la paroi de serrage.

Comme on le voit mieux sur les figures 2 et 3, la portion de raccordement de chaque oreille présente à sa base deux avancées, respectivement 34A et 34B, dans lesquelles la courbure de ladite portion de raccordement est localement augmentée. En l'espèce, pour une oreille, les deux avancées 34A et 34B sont disposées aux deux extrémités axiales de l'oreille, tandis qu'une partie intermédiaire 34C s'étendant sur la quasi-totalité de la longueur de l'oreille est ménagée entre ces avancées. On a indiqué précédemment que la portion de raccordement est courbe. En fait, cette portion de raccordement a avantageusement une courbure sensiblement constante, depuis sa base jusqu'à son sommet 20'A, (auquel elle est reliée à la paroi de serrage 20B), sauf dans les avancées 34A et 34B où la courbure est localement augmentée. Comme on le comprend en considérant la figure 2, dans la mesure où les parties en avancée des deux oreilles de la même paire sont en regard l'une de l'autre, elles diminuent localement entres elles la largeur de la fente 26. On voit sur les figures 3 et 4 que la circularité de la partie de ceinture 10 A du collier est maintenue dans les parties en avancée 34A et 34B, presque jusqu'au sommet de ces dernières. Ainsi, l'appui exercé par la ceinture du collier sur le ou les objets à serrer est pratiquement réparti sur un cercle fermé lorsque le collier est serré.

La figure 4 permet de mieux comprendre l'intérêt de la conformation des oreilles selon l'invention.

On voit que les oreilles 20 et 22 sont légèrement inclinées vers l'arrière, c'est-à-dire que leurs parois de serrage respectives sont inclinées d'un angle α de l'ordre de 20° à 40°, en particulier voisin de 30°, par rapport aux rayons de la partie de ceinture passant par leurs sommets 20'A, 22'A, dans le sens allant en s'éloignant l'une de l'autre vers leurs extrémités opposées à leurs portions de raccordement. La tige de la vis est quant à elle sensiblement perpendiculaire à un rayon médian R de la partie de ceinture, contenu dans un plan de symétrie entre les oreilles, par rapport auquel les parois de serrage des oreilles s'écartent légèrement, par exemple de l'ordre de 2° à 10° en allant vers leurs extrémités libres.

Dans ces conditions, on voit que la tige de la vis porte sur les bords intérieurs 19A et 19G (proches du centre de la partie de la ceinture) des perçages 19 des parois de serrage 20B et 22B et sur les bords extérieurs 19D et 19F des portions de raccordement 20A et 22A, tandis qu'un léger jeu est constaté sur les autres bords 19B, 19C, 19E et 19H de ces perçages. Ainsi, la tige de la vis joue le rôle d'une poutre, sur laquelle réagissent les bords des perçages 19, contribuant ainsi à éviter les déformations excessives de ces oreilles, ce qui n'exclut pas qu'à la fin du serrage (non représentée) les parois de serrage se redressent pour devenir approximativement parallèles au rayon R, améliorant ainsi la portée de la tête de la vis et de l'écrou contre ces parois.

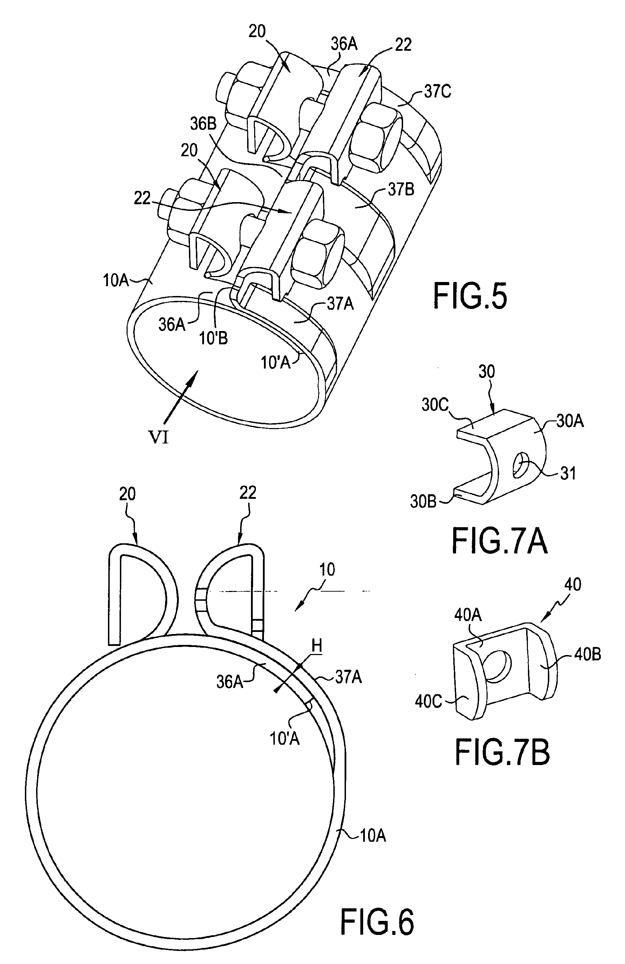

Les figures 5 et 6 montrent une variante de réalisation de ce collier, pour laquelle la continuité de l'appui de la ceinture sur l'objet à serrer est assurée grâce à des bavettes qui s'étendent, à partir d'une extrémité du collier, sous l'autre extrémité.

La première oreille 20 d'une paire d'oreilles est formée par un repli de matière à partir de la première extrémité 10'A de la bande dans laquelle est réalisé le collier par un enroulement de cette bande sur elle-même. Plus précisément, pour former l'oreille, deux fentes s'étendant selon la circonférence du collier, c'est-à-dire selon la longueur de la bande formant le collier, sont réalisées à partir de l'extrémité libre de la bande. La matière s'étendant entre ces deux fentes est repliée pour former l'oreille 20, tandis que le reste de l'extrémité est enroulé avec la bande pour former la ceinture du collier. Ainsi, l'oreille 20 est formée entre deux bavettes qui s'étendent selon la circonférence de la partie de ceinture 10A, qu'elles prolongent au-delà de l'oreille 20. Dans l'exemple représenté, dans la mesure où le collier présente deux paires d'oreilles, trois bavettes sont ainsi réalisées, respectivement 36A entre une extrémité axiale du collier et une première oreille 20, 36B entre les deux oreilles 20, et 36C entre la deuxième oreille 20 et l'autre extrémité axiale du collier. Pour loger ces bavettes de telle sorte que la périphérie interne du collier soit circulaire, des bossages 37A, 37B et 37C sont formés à la deuxième extrémité 10'B de la bande dans laquelle est formé le collier, en deçà des oreilles 22. La hauteur interne H de ces bossages correspond sensiblement à l'épaisseur de la bande, de sorte que, comme on le voit sur la figure 6, une bavette peut être logée dans chaque bossage en maintenant ainsi la circularité de la périphérie interne du collier. En l'espèce, dans la mesure où trois bavettes sont réalisées, trois bossages aptes à les recevoir sont ainsi formés.

Comme on le voit sur les figures 1 et 4, chacune des oreilles est équipée de moyens de renfort, respectivement 30 et 32, disposés dans une cavité, respectivement 21 et 23 ménagée à l'intérieur de l'oreille, pour éviter l'écrasement de cette dernière.

Selon une première possibilité représentée sur ces figures, ces moyens de renfort sont, pour chaque oreille, un insert disposé dans la cavité précitée. Plus précisément, les inserts 30, 32 qui servent à renforcer les oreilles peuvent présenter chacun la forme d'une gouttière dont le fond 30A est disposé contre la portion de raccordement 20A de l'oreille dans laquelle est logé cet insert (figure 7A). La gouttière présente sensiblement, une section en U, avec un fond convexe, dont la courbure est adaptée à la concavité moyenne de la portion de raccordement de l'oreille. Les deux parois d'extrémité 30B et 30C formant les deux ailes du U sont quant à elles sensiblement parallèles et sont disposées de telle sorte que la face intérieure de la paroi de serrage de l'oreille dans laquelle est disposé l'insert puisse venir coopérer en butée contre les extrémités libres de ces parois.

Dans la mesure où les moyens de serrage utilisés comportent des vis, la partie de fond 30A de la gouttière formant l'insert présente un perçage 31 permettant le passage de la vis à travers cette partie de fond.

La figure 7B montre une variante de réalisation, dans laquelle l'insert 40, qui peut également être disposé dans les oreilles 20 ou 22, présente une partie de fond sensiblement plane 40A, destinée à être disposée contre la face interne de la paroi de serrage de l'oreille dans laquelle est disposé l'insert, et deux ailes, respectivement 40B et 40C, repliées par rapport à cette partie de fond, et dont les extrémités libres sont courbes, de manière à pouvoir coopérer avec la face intérieure de la portion de raccordement 20A ou 20B de l'oreille qui est concave.

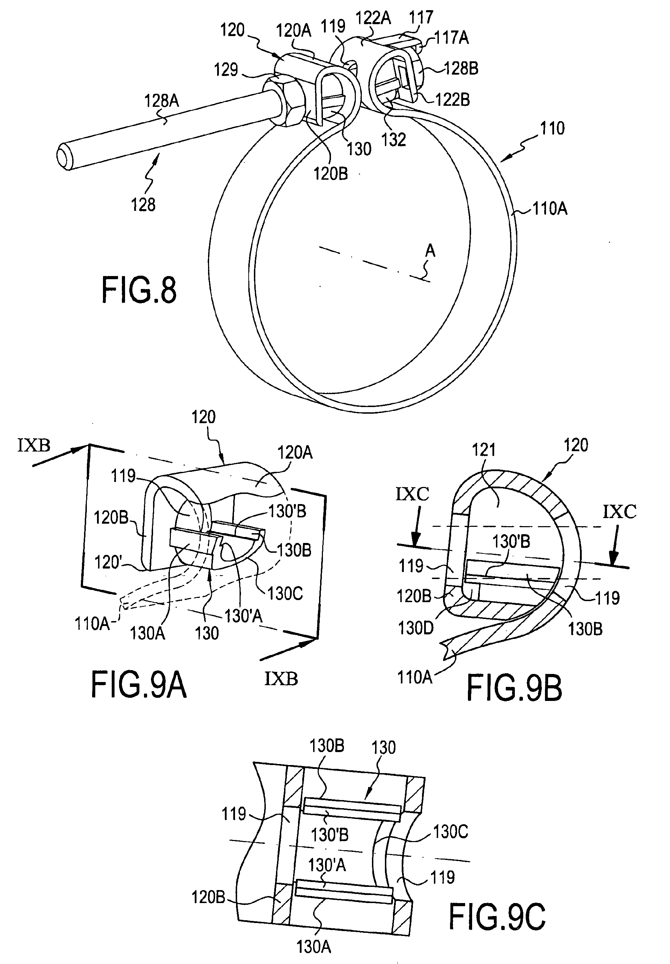

On décrit maintenant une variante de réalisation de l'invention. En se reportant d'abord à la figure 8, on voit que le collier comporte une partie de ceinture 110, avec deux oreilles 120 et 122 disposées en regard l'une de l'autre. En l'espèce, on a représenté un collier destiné par exemple au serrage d'un tuyau ou d'un tube, dont la largeur de la ceinture (mesurée selon la longueur de l'axe A du collier) est plus faible que sur la figure 1 et comporte donc une seule paire d'oreilles 120 et 122. Le serrage s'effectuant également à l'aide d'un système à vis et écrou, on a représenté l'écrou 129 et la vis 128, avec sa tige 128A et sa tête 128B.

Comme sur la figure 1, les oreilles sont relevées par rapport à la partie de ceinture 110A du collier. Des cavités sont également formées à l'intérieur de ces oreilles, qui, comme sur la figure 1, comportent chacune une portion de raccordement à la partie de ceinture du collier, respectivement 120A et 122A, qui est redressée par rapport à cette partie de ceinture, et une paroi de serrage, respectivement 120B et 122B.

Les portions de raccordement et les parois de serrage sont percées par des perçages alignés 119, pour permettre le passage de la tige de la vis à travers elles.

Selon cette variante de réalisation, les moyens de renfort d'une oreille comprennent une entretoise formée en une seule pièce avec cette oreille. En l'espèce, ces moyens de renfort comprennent au moins une entretoise qui s'étend à partir de la paroi de serrage vers la portion de raccordement. Plus précisément, comme on le voit sur les figures 9A et 9C, l'entretoise 130 de l'oreille 120 est repliée, dans l'espace intérieur 121 de cette oreille, vers la portion de raccordement 120A à partir de l'extrémité 120' de la paroi de serrage 120B qui est en regard de la partie de ceinture 110A.

Ainsi, l'entretoise 130 peut simplement être réalisée par une partie d'extrémité repliée sensiblement à angle droit par rapport à la paroi de serrage 120B. Toutefois, dans l'exemple avantageux représenté, l'entretoise est elle-même rigidifiée par des ailes recourbées, 130A et 130B. Pour réaliser ces ailes, des fentes alignées et parallèles à l'axe A du collier sont ménagées à partir des deux bords opposés de la bande dans laquelle est formé le collier, à l'extrémité 120' de la partie de serrage. Entre les fentes, est préservée une partie non fendue qui forme le rattachement de l'entretoise à la paroi de serrage. Les ailes 120A et 120B sont ensuite repliées de telle sorte que, en section parallèle à l'axe A du collier, l'entretoise présente sensiblement la forme d'une gouttière. Pour renforcer encore la rigidification de l'entretoise, les bords des ailes 130A et 130B peuvent présenter des nervures ou des rainures, ou bien comme dans l'exemple représenté, un décrochement 130'A, 130'B. Bien entendu la distance entre les ailes 130A et 130B repliées permet le passage de la vis entre ces ailes, l'entretoise ayant la forme d'une gouttière longitudinale pour la tige de la vis.

L'extrémité libre 130C de l'entretoise 130 est disposée contre la face interne de la portion de raccordement 120, avec laquelle elle peut donc coopérer pour s'opposer à un écrasement de l'oreille. Pour tenir compte de la concavité de cette portion de raccordement, cette extrémité libre est conformée de telle sorte que la longueur de l'entretoise est plus importante dans la région des bords des ailes repliées, que dans la région centrale de la cuvette de fond de l'entretoise.

Les fentes permettant le repli des ailes peuvent être de simples incisions dans la bande, ou bien présenter une portion localement élargie dans la zone d'attachement de l'aile à la partie de fond de l'entretoise, comme on le voit en 130D sur la figure 9B. L'entretoise 132 est réalisée de la même manière que l'entretoise 130, en étant repliée dans l'espace interne 123 de l'oreille 122 à partir de sa paroi de serrage 122B.

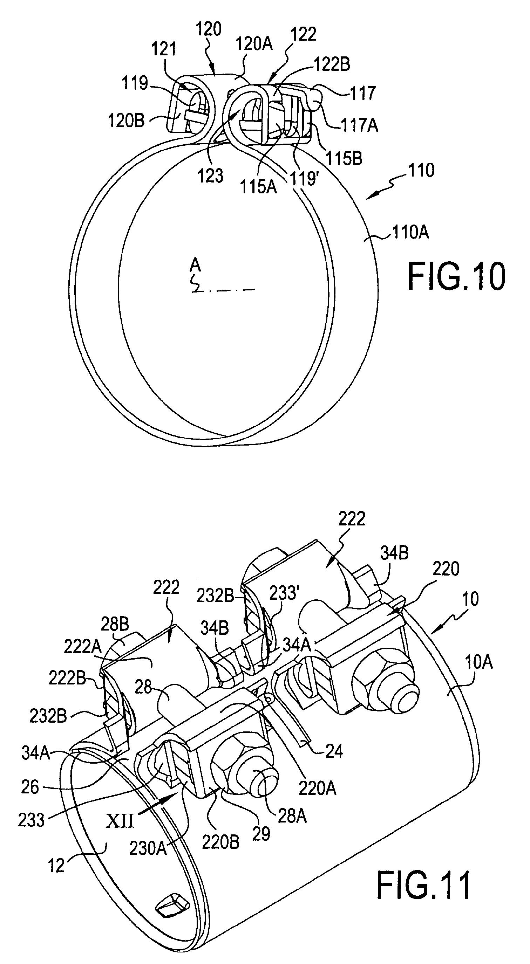

Dans l'exemple de réalisation des figures 8 à 10, le collier comprend des moyens pour caler la tête de la vis lors de son serrage. Plus précisément, comme on le voit sur les figures 8 et 10, la partie de l'oreille contre laquelle coopère la tête de la vis, soit en l'espèce la paroi de serrage 122B de l'oreille 122, comporte au moins un bossage de calage pour coopérer avec une forme adaptée, en particulier un méplat, de la tête de la vis. En l'espèce, deux bossages de calage, respectivement 115A et 115B sont formés dans la paroi de serrage, de manière à faire saillie sur l'extérieur de cette dernière. Ces bossages sont avantageusement constitués par des crevés, c'est-à-dire que, dans la région faisant face à la partie de la tête de la vis avec laquelle ils coopèrent, ils présentent chacun un bord de calage découpé dans la bande.

Dans l'exemple représenté sur la figure 8, la tête de la vis présente une forme à six pans, dont deux méplats opposés viennent contre les bords de calage des bossages 115A et 115B. De manière générale, il est avantageux que le dispositif comporte des moyens pour caler l'un des éléments constitués par la tête de la vis et par l'écrou, contre l'oreille contre laquelle cet élément est disposé.

Pour retenir la vis contre la paroi de serrage 122B, l'oreille 122 présente une patte de retenue 117 qui s'étend à partir du sommet de cette oreille, au-dessus de la tête de la vis, et dont l'extrémité libre 117A est repliée contre la face d'extrémité de la tête, après la mise en place de cette dernière. On a évoqué précédemment la présence de perçages 119 pour permettre le passage de la tige de la vis dans les oreilles. Le perçage de la paroi de raccordement 122B de l'oreille 122 est formé par une découpe 119' à partir de laquelle la patte 117 est relevée. On pourrait à l'inverse choisir de retenir l'écrou par une patte de retenue analogue.

On décrit maintenant les figures 11 à 13, qui montrent une variante de réalisation de l'invention utilisant également des moyens de renfort en une seule pièce avec les oreilles. Il s'agit d'un collier du même type que celui de la figure 1 et les mêmes références numériques sont utilisées pour les parties inchangées.

Selon cette variante, les oreilles 220 et 222 sont modifiées pour que leurs moyens de renfort soient formés par des entretoises en une seule pièce avec elles. Chaque oreille comporte une portion de raccordement, 220A ou 222A, et une paroi de serrage 220B ou 222B, analogues à celles de la figure 1. Pour chaque oreille, les moyens de renfort comprennent deux entretoises qui s'étendent à partir de la paroi de serrage vers la portion de raccordement.

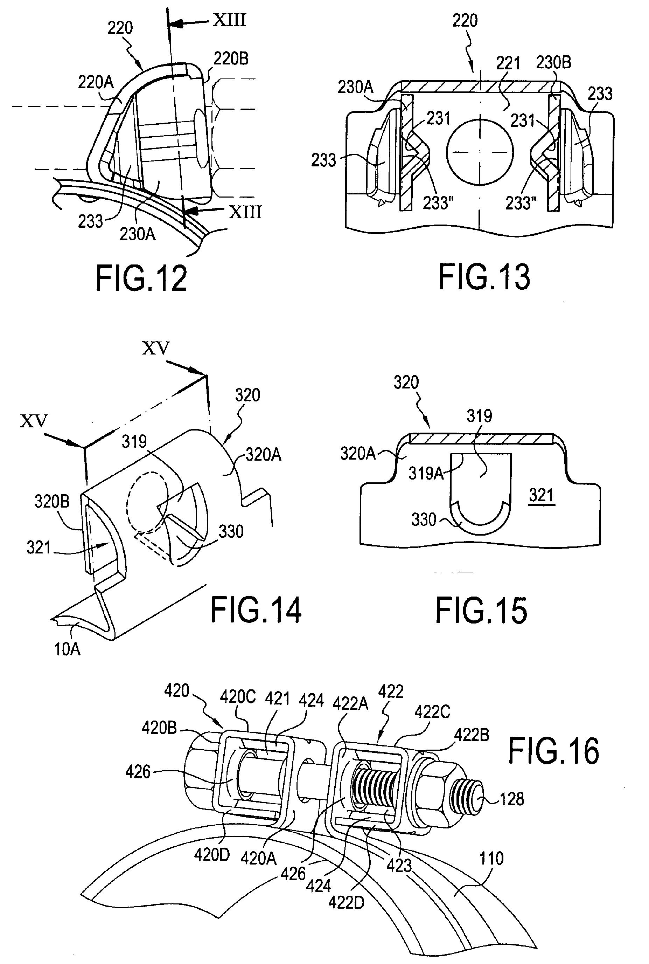

Plus précisément, si l'on se reporte en particulier à la figure 13 s'agissant d'une oreille 220, on voit que ces entretoises sont formées par des ailes, respectivement 230A et 230B, de la paroi de serrage 220B qui sont repliées vers la portion de raccordement 220A dans l'espace intérieur 221 de l'oreille. Les entretoises des oreilles 222 sont formées de la même manière, seules les ailes 232B des oreilles 222 étant visibles sur la figure 11.

Ainsi, les extrémités libres des ailes sont situées contre la face interne de la portion de raccordement, elles peuvent donc coopérer avec elles pour s'opposer à un écrasement de l'oreille, c'est-à-dire un rapprochement entre la paroi de serrage et la portion de raccordement.

Les ailes formant les entretoises présentent avantageusement des moyens de rigidification. En l'espèce, il s'agit de rainures 231 sensiblement parallèles à la longueur des ailes, mesurée dans le sens de la longueur de la tige de la vis coopérant avec l'oreille considérée. Ces rainures s'étendent sur toute la longueur des ailes, et sont en l'espèce ménagées en creux à partir de la face externe des ailes, opposée à la tige de la vis située entre ces ailes. Bien entendu, une conformation inverse, dans laquelle les rainures seraient en creux à partir de la face interne des ailes est également parfaitement envisageable.

Comme on le voit également sur les figures 11 à 13, le dispositif comporte des moyens pour caler les entretoises par rapport à la portion de raccordement. En l'espèce, dans la mesure où deux ailes équipent chaque oreille, deux cales sont ainsi prévues. Dans l'exemple représenté, chaque aile est calée par un bossage 233 de la portion de raccordement, qui est en saillie vers la paroi de serrage. Avantageusement, chaque bossage est formé par un crevé. Ainsi, une découpe 233' est formée dans l'oreille (voir une oreille 222 sur la figure 10) de telle sorte que le bossage lorsqu'il est redressé présente une arête franche 233" (voir figure 13), contre laquelle est située l'aile 230A ou 230B qu'il cale.

Pour chaque aile, le bossage est situé sur l'extérieur de l'aile, c'est-à-dire du côté opposé à la tige de la vis. Il évite ainsi que cette aile n'ait tendance à s'écarter de l'autre aile de la même oreille. Bien entendu, les bossages 233 sont réalisés après le repli des ailes formant les entretoises.

On décrit maintenant les figures 14 et 15 qui montrent une autre variante pour le deuxième mode de réalisation. Pour simplifier, on n'a représenté sur ces figures qu'une seule oreille 320 qui peut être analogue aux oreilles précédemment décrites à ceci près qu'elle présente une entretoise différente. En effet, les moyens de renfort de cette oreille comprennent une entretoise formée par une languette 330 qui est découpée dans la portion de raccordement 320A de l'oreille et qui est repliée dans l'espace intérieur 321 de manière à s'étendre vers la paroi de serrage. Lorsque la vis est en place dans l'oreille, cette languette s'étend sensiblement parallèlement à la tige de cette vis. Avantageusement, elle est disposée entre la vis et la base de la portion de raccordement 320A, c'est-à-dire entre la vis et la ceinture 10A du collier.

Avantageusement, lorsque la languette est repliée comme représenté sur les figures 14 et 15, la découpe de cette languette ainsi dégagée forme une ouverture 319 pour le passage de la tige de la vis. Comme on le voit mieux sur la figure 15, la languette est avantageusement concave, pour former une gouttière pour la vis, cette concavité permettant d'augmenter la rigidité de la languette, c'est-à-dire de s'opposer à son pliage selon sa longueur. L'extrémité libre de la languette présente avantageusement une forme rectiligne en vue du dessus, délimitée par le bord supérieur 319A de l'ouverture 319. Ainsi, cette extrémité libre repose sur la face interne de la paroi de serrage 320B en s'adaptant à la forme de cette dernière.

La présence de la languette 330 diminue localement la quantité de matière dans la portion de raccordement et diminue donc légèrement sa résistance mécanique. Selon cette variante, les moyens de renfort peuvent être formés sans ajouter de matière au collier, et donc en préservant pour ce dernier une structure légère.

On décrit maintenant les figures 16 à 19, qui montrent des variantes de réalisation de l'invention, inspirées de celle des figures 8 à 10.

Sur la figure 16, les oreilles 420, 422 redressées par rapport à la partie de ceinture 110 du collier présentent, en vue de côté, une forme sensiblement carrée.

Plus précisément, leurs portions 420A, 422A de raccordement à la partie de ceinture s'étendent sensiblement radialement en ayant la forme de parois sensiblement planes, et leurs parois de serrage 420B, 422B sont également sensiblement planes et pratiquement parallèles aux portions de raccordement. Ces parois de serrage sont reliées aux portions de raccordement par des parois de liaison 420C, 422C à angle droit et les oreilles se terminent par des parois d'extrémité repliées 420D, 422D, qui sont également à angle droit et dont les extrémités libres respectives butent contre les faces internes des portions de raccordement.

Les parois de liaison 420C, 422C et les parois repliées 420D, 422D sont renforcées par des bossages internes 424 formant des nervures sensiblement parallèles au fût de la vis. Les extrémités de ces bossages, respectivement voisines des faces internes des portions de raccordement et des parois de serrage peuvent se présenter sous la forme de bords francs en butée contre ces faces internes. Sauf à l'extrémité libre des parois repliées 420D, 422D, ces bords francs sont obtenus par des fentes transversales, pratiquées avant ou pendant la formation des bossages.

Les parois repliées 420D, 422D, de même que les parois de liaison 420C, 422C jouent le rôle de moyens de renfort des oreilles 420 et 422, réalisés en une seule pièce avec elles, sous la forme d'entretoises intégrées. On remarque que les perçages des portions de raccordement 420A, 422A et des parois de serrage 420B, 422B à travers lesquels passe le fût de la vis 128 sont bordés par des collets cylindriques 426 qui s'étendent dans l'espace interne 421, respectivement 423, de chaque oreille. Ces collets sont formés par des bords repliés de ces perçages. Ils forment des paliers de guidage de la vis, améliorant sa résistance au flambement lors du serrage du collier.

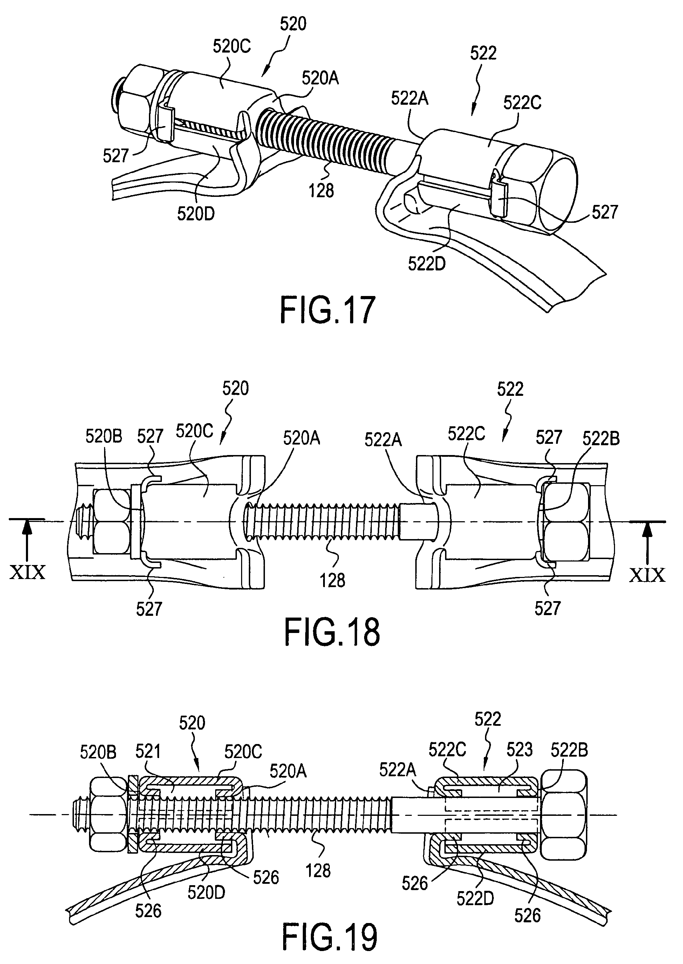

Sur les figures 17 à 19, les oreilles 520 et 522 sont conformées en cylindres parallèles au fût de la vis 128.

Plus précisément, pour chaque oreille, la paroi de liaison 520C ou 522C entre la portion de raccordement 520A ou 522A et la paroi de serrage 520B ou 522B, a ses bords longitudinaux repliés vers l'axe de la vis pour adopter la forme d'une gouttière semi-cylindrique dont la concavité est tournée vers l'axe du collier.

Pour chaque oreille, la paroi d'extrémité 520D ou 522D qui est repliée à partir de la paroi de serrage 520B ou 522B vers la portion de raccordement 520A ou 522A a également ses bords longitudinaux repliés vers l'axe de la vis pour former une gouttière semi-cylindrique, dont la concavité est opposée à l'axe du collier et qui, avec la gouttière précédemment évoquée, complète le cylindre.

Ces parois d'extrémité en gouttière sont globalement réalisées comme les entretoises 130 et 132 de la figure 8. En particulier, des fentes permettant le repli de leurs bords ou ailes sont pratiquées à la jonction des parois d'extrémités et des parois de serrage. De même, des fentes permettant le repli des bords ou ailes des parois de liaison 520C, 522C sont pratiquées à leurs jonctions avec, respectivement, les portions de raccordement et les parois de serrage.

On obtient ainsi, dans chaque paroi de serrage et pour chaque côté du perçage pratiqué dans cette paroi, une patte 527 délimitée entre les deux fentes situées du même côté du perçage, respectivement en haut et en bas de la paroi de serrage.

Pour l'oreille 522, ces deux pattes 527 sont repliées pour s'étendre sensiblement parallèlement à l'axe de la vis en s'éloignant de la portion de raccordement. En coopérant avec des méplats de l'élément, tête de vis ou écrou, en appui contre cette oreille, ces pattes permettent de caler cet élément en empêchant sa rotation.

Pour l'oreille 520, les pattes 527 sont repliées contre les ailes des parois de liaison et d'extrémité, c'est-à-dire contre la paroi du cylindre précédemment évoqué, dont elles augmentent ainsi la résistance mécanique. Ces pattes pourraient également être découpées.

Comme la variante de la figure 16, celle des figures 17 à 19 peut comporter des collets cylindriques internes 526 (voir figure 19) qui s'étendent dans les espaces 521, respectivement 523 ménagés, pour chaque oreille, dans les cylindres, entre la portion de raccordement et la paroi de serrage. Ces collets qui, pour chaque oreille, peuvent être réalisés à partir de la paroi de serrage et/ou à partir de la portion de raccordement, favorisent le guidage du fût de la vis et sa résistance au flambement.

Les parois de liaison et d'extrémité en gouttière des oreilles 520 et 522 forment des entretoises qui renforcent ces oreilles pour augmenter leur résistance à la compression lors du serrage et transformer l'effort de serrage en effort de tension de bande.

## Revendications

1. Dispositif de serrage comprenant un collier (10 ; 110), susceptible d'être disposé autour d'objets à serrer et présentant au moins une paire d'oreilles saillantes (20, 22 ; 120, 122 ; 220 , 222 ; 320 ; 420, 422 ; 520, 522), le dispositif comprenant, en outre, des moyens de serrage (28, 29 ; 128, 129) aptes à coopérer avec des oreilles de ladite paire pour déplacer ces dernières l'une par rapport à l'autre de manière à provoquer une diminution du diamètre du collier, chaque oreille (20, 22 ; 120, 122 ; 220 , 222 ; 320 ; 420, 422 ; 520, 522) de ladite paire comportant une portion (20A, 22A ; 120A, 122A ; 220A , 222A ; 320A ; 420A, 422A ; 520A, 522A) de raccordement à une partie de ceinture (10A; 110A) du collier, qui est redressée par rapport à ladite partie de ceinture et une paroi de serrage (20B, 22B ; 120B, 122B ; 220B, 222B ; 320B, ; 420B, 422B ; 520B, 522B), avec laquelle les moyens de serrage (28, 29 ; 128, 129) viennent en prise et qui est repliée vers la partie de ceinture (10A ; 110A), et un espace (21, 23 ; 121 ; 221 ; 321 ; 421) étant ménagé entre la portion de raccordement et la paroi de serrage, de sorte que les efforts de serrage s'appliquent sur la paroi de serrage, à distance de la portion de raccordement de l'oreille à la partie de ceinture, et les oreilles (20, 22 ; 120, 122 ; 220, 222 ; 320 ; 420, 422 ; 520, 522) de ladite paire étant chacune équipée de moyens de renfort (30, 32 ; 130, 132 ; 230A, 230B, 232A, 330 ; 420C, 422C ; 420D, 422D ; 520C, 522C ; 520D, 522D), aptes à s'opposer à une déformation desdites oreilles sous l'action desdits moyens de serrage,
**caractérisé en ce que** les moyens de renfort d'une oreille (120, 122 ; 220, 222 ; 320 ; 420, 422 ; 520, 522) comprennent au moins une entretoise (130, 132 ; 230A, 230B, 232A ; 330 ; 420C, 420D ; 422C, 422D ; 520C, 522D) qui est formée en une seule pièce avec l'oreille et qui s'étend à partir de la paroi de serrage (120B, 122B ; 420B, 422B ; 520B, 522B), vers la portion de raccordement (120A, 122A ; 420A, 422A ; 520A, 522A) et **en ce que** la portion de raccordement (220A, 222A) présente au moins un bossage (233) en saillie vers la paroi de serrage (220B, 222B) pour caler la ou les entretoises (230A, 230B, 232B) par rapport à la portion de raccordement.

2. Dispositif selon la revendication 1, **caractérisé en ce que** la portion de raccordement (20A, 22A ; ; 120A, 122A ; 220A, 222A ; 320A ; 520A, 522A) est courbe, sa concavité étant tournée vers la paroi de serrage (20B, 22B ; 120B, 122B ; 220B , 222B ; 320B ; 520B, 522B).

3. Dispositif selon la revendication 2, **caractérisé en ce que** la portion de raccordement (20A, 22A ; 220A, 222A ; 520A) présente à sa base au moins une avancée (34A, 34B) dans laquelle la courbure de ladite portion est localement augmentée.

4. Dispositif selon l'une quelconque des revendications 1 à 3, **caractérisé en ce que** les moyens de renfort comprennent deux entretoises, formées par des ailes (230A, 230B ; 232B) de la paroi de serrage (220B, 222B), repliées vers la portion de raccordement (220A, 222A) de telle sorte que les extrémités libres de ces ailes soient aptes à coopérer avec ladite portion.

5. Dispositif selon l'une quelconque des revendications 1 à 4, **caractérisé en ce que** les moyens de renfort comprennent une entretoise (130, 132 ; 420D, 422D ; 520D, 522D) repliée vers la portion de raccordement (120A, 122A ; 420A, 422A ; 520A, 522A) à partir de l'extrémité (120') de la paroi de serrage (120B, 122B ; 420B, 422B ; 520B, 522B) en regard de la partie de ceinture (110A), de telle sorte que l'extrémité libre (130A) de cette entretoise soit apte à coopérer avec la portion de raccordement.

6. Dispositif selon la revendication 5, **caractérisé en ce que** les moyens de renfort comprennent une paroi de liaison (420C, 422C ; 520C, 522C) entre la portion de raccordement et la paroi de serrage.

7. Dispositif selon la revendication 6, **caractérisé en ce que** au moins l'un des éléments constitués par ladite entretoise et par ladite paroi de liaison est conformé en gouttière.

8. Dispositif selon l'une quelconque des revendications 1 à 7, **caractérisé en ce que** les moyens de renfort d'une oreille (320) comprennent une entretoise (320A) formée par une languette (330) découpée dans la portion de raccordement et repliée de manière à s'étendre vers la paroi de serrage (320B).

9. Dispositif selon l'une quelconque des revendications 1 à 8, **caractérisé en ce que** les moyens de serrage comprennent au moins une vis (28, 128) dont la tête (28B, 128B) est disposée contre une oreille (22, 122 ; 420 ; 522) de la paire et un écrou (29, 129) qui est disposé contre l'autre oreille (20, 120 ; 422 ; 520) de la paire et qui coopère avec la tige de la vis (28A, 128A).

10. Dispositif selon la revendication 9, **caractérisé en ce qu'**il comporte des moyens (115A, 115B ; 527) pour caler l'un des éléments constitués par la tête (28B, 128B) de la vis et par l'écrou par rapport à l'oreille contre laquelle cet élément est disposé.

11. Dispositif selon la revendication 10, **caractérisé en ce que** la paroi de serrage présente au moins une saillie externe de calage (115A, 115B ; 527).

12. Dispositif selon l'une quelconque des revendications 9 à 11, **caractérisé en ce que** l'une des oreilles de la paire (122B) porte une patte de retenue (117 ; 527) pour retenir contre elle celui des éléments constitués par la tête de la vis et par l'écrou qui coopère avec cette oreille.

13. Dispositif selon l'une quelconque des revendications 1 à 12, pour l'accouplement étanche de deux tubes lisses disposés bout à bout **caractérisé en ce qu'**il comprend, en outre, une bague d'étanchéité (12) apte à être disposée dans le collier (10) pour entourer les extrémités en regard des deux tubes.

## Claims

1. A clamping device comprising a collar (10; 110), suitable for being disposed around objects to be clamped, and having at least one pair of projecting lugs (20, 22; 120, 122; 220, 222; 320; 420, 422; 520, 522), the device further comprising tightening means (28, 29; 128, 129) suitable for co-operating with lugs of said pair to move them relative to each other in a manner such as to cause the diameter of the collar to decrease, each lug (20; 22; 120, 122; 220, 222; 320; 420, 422; 520, 522) of said pair having a connection portion (20A, 22A; 120A, 122A; 220A, 222A; 320A; 420A, 422A; 520A, 522A) via which it is connected to a belt portion (10A; 110A) of the collar, which connection portion is upstanding relative to said belt portion, and a tightening wall (20B, 22B; 120B, 122B; 220B, 222B; 320B; 420B, 422B; 520B, 522B), with which the tightening means (28, 29; 128, 129) come into engagement and which is folded back towards the belt portion (10A; 110A), and a space (21, 23; 121; 221; 321; 421) is formed between the connection portion and the tightening wall, so that the tightening forces are applied to the tightening wall, remote from the connection portion of the lug that connects the lug to the belt portion, and each of the lugs (20, 22; 120, 122; 220, 222; 320; 420, 422; 520, 522) of said pair is equipped with reinforcement means (30, 32; 130, 132; 230A, 230B, 232A, 330; 420C, 422C; 420D, 422D; 520C, 522C; 520D, 522D) suitable for opposing deformation of said lugs under the action of said tightening means,
**characterized in that** the reinforcement means of a lug (120, 122; 220, 222; 320; 420, 422; 520, 522) comprise at least a spacer (130, 132; 230A, 230B, 232A; 330; 420C, 420D; 422C, 422D; 520C, 522D), which is formed in one piece with the lug and which extends from the tightening wall (120B, 122B; 420B, 422B; 520B, 522B) towards the connection portion (120A, 122A; 420A, 422A; 520A, 522A), and **in that** the connection portion (220A, 222A) has at least one boss (233) projecting towards the tightening wall (220B, 222B), for wedging the at least one spacer (230A, 230B, 232B) relative to the connection portion.

2. A device according to claim 1, **characterized in that** the connection portion (20A, 22A; 120A, 122A; 220A, 222A; 320A; 520A, 522A) is curved, its concave side facing the tightening wall (20B, 22B; 120B, 122B; 220B; 222B; 320B; 520B, 522B).

3. A device according to claim 2, **characterized in that** the connection portion (20A, 22A; 220A, 222A; 520A) has, at its base, at least one protuberance (34A, 34B) in which the curvature of said portion is locally increased.

4. A device according to any one of claims 1 to 3, **characterized in that** the reinforcement means comprise two spacers, formed by flanges (230A, 230B; 232B) of the tightening wall (220B, 222B) folded back towards the connection portion (220A, 222A) in a manner such that the free ends of said flanges are suitable for co-operating with said portion.

5. A device according to any one of claims 1 to 4, **characterized in that** the reinforcement means comprise a spacer (130, 132; 420D, 422D; 520D, 522D) folded back towards the connection portion (120A, 122A; 420A, 422A; 520A, 522A) from the end (120') of the tightening wall (120B, 122B; 420B, 422B; 520B, 522B) facing the belt portion (110A), in a manner such that the free end (130A) of said spacer is suitable for co-operating with the connection portion.

6. A device according to claim 5, **characterized in that** the reinforcement means comprise a link wall (420C, 422C; 520C, 522C) between the connection portion and the tightening wall.

7. A device according to claim 6, **characterized in that** at least one of the elements constituted by said spacer and by said link wall is trough-shaped.

8. A device according to any one of claims 1 to 7, **characterized in that** the reinforcement means of a lug (320) comprise a spacer (320A) formed by a tongue (330) cut out from the connection portion and folded back in a manner such as to extend towards the tightening wall (320B).

9. A device according to any one of claims 1 to 8, **characterized in that** the tightening means comprise at least one bolt (28, 128) whose head (28B, 128B) is disposed against a lug (22, 122; 420; 522) of the pair and a nut (29, 129) that is disposed against the other lug (20, 120; 422; 520) of the pair and that co-operates with the shank of the bolt (28A, 128A).

10. A device according to claim 9, **characterized in that** it further comprises means (115A, 115B; 527) for wedging one of the elements constituted by the head (28B, 128B) of the bolt and by the nut relative to the lug against which said element is disposed.

11. A device according to claim 10, **characterized in that** the tightening wall has at least one wedging external projection (115A, 115B; 527).

12. A device according to any one of claims 9 to 11, **characterized in that** one of the lugs in the pair (12B) carries a retaining catch (117; 527) for retaining against it that one of the elements constituted by the head of the bolt and by the nut that co-operates with said lug.

13. A device according to any one of claims 1 to 12 for coupling together in leaktight manner two smooth tubes disposed end-to-end, said device being **characterized in that** it further comprises a sealing ring (12) suitable for being disposed in the collar (10) for surrounding the facing ends of the two tubes.

## Patentansprüche

1. Klemmvorrichtung, umfassend eine Schelle (10; 110), die geeignet ist, um festzuklemmende Gegenstände herum angeordnet zu werden, und die wenigstens ein Paar vorspringender Ösen (20, 22; 120, 122; 220, 222; 320; 420, 422; 520, 522) aufweist, wobei die Vorrichtung ferner Klemmittel (28, 29; 128, 129) umfaßt, die geeignet sind, mit Ösen des Paares zusammenzuwirken, um letztere zueinander zu bewegen, um eine Verringerung des Durchmessers der Schelle zu bewirken, wobei jede Öse (20, 22; 120, 122; 220, 222; 320; 420, 422; 520, 522) des Paares einen Abschnitt (20A, 22A; 120A, 122A; 220A, 222A; 320A; 420A, 422A; 520A, 522A) zum Verbinden mit einem Ringteil (10A; 110A) der Schelle, der gegenüber dem Ringteil aufgerichtet ist, sowie eine Klemmwand (20B, 22B; 120B, 122B; 220B, 222B; 320B; 420B, 422B; 520B, 522B), mit der die Klemmittel (28, 29; 128, 129) in Eingriff gelangen und die zu dem Ringteil (10A; 110A) hin umgebogen ist, umfaßt, und wobei ein Raum (21, 23; 121; 221; 321; 421) zwischen dem Verbindungsabschnitt und der Klemmwand ausgebildet ist, so daß die Klemmkräfte an der Klemmwand im Abstand von dem Abschnitt zum Verbinden der Öse mit dem Ringteil angreifen, und wobei die Ösen (20, 22; 120, 122; 220, 222; 320; 420, 422; 520, 522) des Paares jeweils mit Verstärkungsmitteln (30, 32; 130, 132; 230A, 230B, 232A, 330; 420C, 422C; 420D, 422D; 520C, 522C; 520D, 522D) ausgestattet sind, die geeignet sind, einer Verformung der Ösen unter der Wirkung der Klemmittel entgegenzuwirken,
**dadurch gekennzeichnet, daß** die Verstärkungsmittel einer Öse (120, 122; 220, 222; 320; 420, 422; 520, 522) wenigstens einen Steg (130, 132; 230A, 230B, 232A; 330; 420C, 420D; 422C, 422D; 520C, 522D) umfassen, der mit der Öse einstückig ausgebildet ist und der sich von der Klemmwand (120B, 122B; 420B, 422B; 520B, 522B) in Richtung des Verbindungsabschnitts (120A, 122A; 420A, 422A; 520A, 522A) erstreckt, und daß der Verbindungsabschnitt (220A, 222A) wenigstens einen in Richtung der Klemmwand (220B, 222B) vorspringenden Buckel (233) aufweist, um den oder die Stege (230A, 230B, 232B) gegenüber dem Verbindungsabschnitt festzusetzen.

2. Vorrichtung nach Anspruch 1, **dadurch gekennzeichnet, daß** der Verbindungsabschnitt (20A, 22A; 120A, 122A; 220A, 222A; 320A; 520A, 522A) gekrümmt ist, wobei seine Konkavität der Klemmwand (20B, 22B; 120B, 122B; 220B, 222B; 320B; 520B, 522B) zugewandt ist.

3. Vorrichtung nach Anspruch 2, **dadurch gekennzeichnet, daß** der Verbindungsabschnitt (20A, 22A; 220A, 222A; 520A) an seiner Basis wenigstens einen Vorsprung (34A, 34B) aufweist, in dem die Krümmung des Abschnitts lokal verstärkt ist.

4. Vorrichtung nach einem der Ansprüche 1 bis 3, **dadurch gekennzeichnet, daß** die Verstärkungsmittel zwei Stege umfassen, die durch Flügel (230A, 230B; 232B) der Klemmwand (220B, 222B) gebildet sind, welche zu dem Verbindungsabschnitt (220A, 222A) hin umgebogen sind, so daß die freien Enden dieser Flügel geeignet sind, mit dem Abschnitt zusammenzuwirken.

5. Vorrichtung nach einem der Ansprüche 1 bis 4, **dadurch gekennzeichnet, daß** die Verstärkungsmittel einen Steg (130, 132; 420D, 422D; 520D, 522D) umfassen, der ausgehend von dem Ende (120') der Klemmwand (120B, 122B; 420B, 422B; 520B, 522B) gegenüber dem Ringteil (110A) zu dem Verbindungsabschnitt (120A, 122A; 420A, 422A; 520A, 522A) hin umgebogen ist, so daß das freie Ende (130A) dieses Stegs geeignet ist, mit dem Verbindungsabschnitt zusammenzuwirken.

6. Vorrichtung nach Anspruch 5, **dadurch gekennzeichnet, daß** die Verstärkungsmittel eine Verbindungswand (420C, 422C; 520C, 522C) zwischen dem Verbindungsabschnitt und der Klemmwand umfassen.

7. Vorrichtung nach Anspruch 6, **dadurch gekennzeichnet, daß** wenigstens eines der Elemente, die durch den Steg und durch die Verbindungswand gebildet sind, rinnenförmig ausgebildet ist.

8. Vorrichtung nach einem der Ansprüche 1 bis 7, **dadurch gekennzeichnet, daß** die Verstärkungsmittel einer Öse (320) einen Steg (320A) umfassen, der durch eine Zunge (330), welche aus dem Verbindungsabschnitt ausgeschnitten und derart umgebogen ist, daß sie sich in Richtung der Klemmwand (320B) erstreckt, gebildet ist.

9. Vorrichtung nach einem der Ansprüche 1 bis 8, **dadurch gekennzeichnet, daß** die Klemmittel wenigstens eine Schraube (28, 128), deren Kopf (28B, 128B) an einer Öse (22, 122; 420; 522) des Paares angeordnet ist, sowie eine Mutter (29, 129), die an der anderen Öse (20, 120; 422; 520) des Paares angeordnet ist und mit dem Schaft der Schraube (28A, 128A) zusammenwirkt, umfassen.

10. Vorrichtung nach Anspruch 9, **dadurch gekennzeichnet, daß** sie Mittel (115A, 115B; 527) umfaßt, um eines der Elemente, die durch den Kopf (28B, 128B) der Schraube und durch die Mutter gebildet sind, gegenüber der Öse, an der dieses Element angeordnet ist, festzusetzen.

11. Vorrichtung nach Anspruch 10, **dadurch gekennzeichnet, daß** die Klemmwand wenigstens einen äußeren Festkeilvorsprung (115A, 115B; 527) aufweist.

12. Vorrichtung nach einem der Ansprüche 9 bis 11, **dadurch gekennzeichnet, daß** eine der Ösen des Paares (122B) eine Haltelasche (117; 527) trägt, um dasjenige der durch den Kopf der Schraube und durch die Mutter gebildeten Elemente an ihr zu halten, das mit dieser Öse zusammenwirkt.

13. Vorrichtung nach einem der Ansprüche 1 bis 12, zum dichten Kuppeln von zwei aneinander angeordneten glatten Rohren, **dadurch gekennzeichnet, daß** sie ferner einen Dichtungsring (12) umfaßt, der geeignet ist, in der Schelle (10) angeordnet zu werden, um die gegenüberliegenden Enden der beiden Rohre zu umschließen.
